# EUROPEAN PATENT SPECIFICATION

(11) **EP 3 337 975 B1**
(45) Date of publication and mention of the grant of the patent: **10.03.2021**
(21) Application number: 16756658.7
(22) Date of filing: 16.08.2016
(51) Int. Cl.: F04B 1/04, F02M 59/10, F16H 53/06

(54) **HIGH PRESSURE DIESEL FUEL PUMPS**
HOCHDRUCKDIESELKRAFTSTOFFPUMPEN
POMPES À CARBURANT DIESEL HAUTE PRESSION

(30) Priority: 18.08.2015 GB 201514644
(43) Date of publication of application: 27.06.2018
(73) Proprietor: Delphi Technologies IP Limited, Saint Michael (BB)
(72) Inventor: DE SARAM, Ruwantha, Dartford Kent DA1 5JB (GB); JURY, Thomas, Ashford Kent TN26 1JA (GB)
(74) Representative: Delphi France SAS
(86) International application number: PCT/EP2016/069446
(87) International publication number: WO 2017/029295

(56) References cited:
- EP-A1- 2 657 505
- US-A1- 2007 071 622
- US-A1- 2010 024 779
- US-A1- 2010 037 865
- US-B1- 7 568 461

## Description

### BACKGROUND

### Technical Field

The present invention relates generally to the field of high pressure diesel fuel pumps. More particularly, but not exclusively, the present invention concerns an adapted shoe guide, shoe and roller (cam follower) and cam for high pressure diesel fuel pumps.

### Description of the Related Art

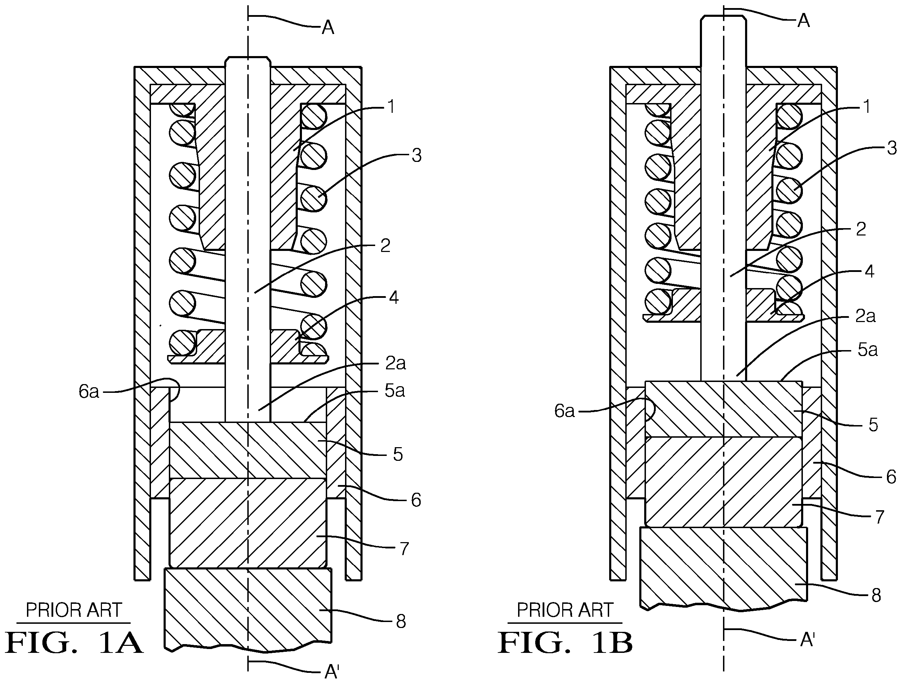

As shown in Figures 1a and 1b, a typical high pressure diesel fuel pump adopting a roller-shoe arrangement as part of the drivetrain, comprises a plunger 2 extending from a hydraulic head 1 along a pumping axis A-A'. A plunger return spring 3 is seated around the head 1 and extends to the top of a spring seat 4 fixed near a lower end 2a of the plunger 2. The lower end 2a of the plunger 2 contacts an upper face 5a of a shoe 5. The shoe 5 slides within an axial bore 6a (disposed along the pumping axis A-A') of a shoe guide 6. A roller 7 is mounted and retained within an aperture (not shown) provided at a lower end of the shoe 5 and slides within the bore 6a with the shoe 5. The roller 7 contacts a surface of a cam 8, which is driven by a rotating driveshaft (not shown) to provide upward sliding motion along the pumping axis A-A'. It is described in US2007/0071622 A1.

As the cam 8 recedes to a bottom dead centre position, the shoe 5 and roller 7 also drop to their lowest position. The expanding force of the spring 3 forces the plunger 2 to drop to its lowest position in which the lower end 2a of the plunger 2 is disposed within the bore 6a of the shoe guide 6. As the cam 8 begins to rise, the roller 7 and shoe 5 also to rise within the bore 6a of the guide 6, thereby forcing the lower end 2a of the plunger 2 upwardly and compressing the spring 3 until the cam 8 reaches top dead centre (as shown in Figure 1b). At top dead centre, a top of the cam 8 may just about reach the bottom of the shoe guide 6.

In such a high pressure fuel pump, the height of the hydraulic head 1 dictates the pump capacity (stroke length along the pumping axis A-A'), which depends upon length of the plunger return spring 3 and the roller 7-cam 8 interface height.

It is advantageous to be able to increase pump capacity (increase the stroke length), but with known pumps the only way to do this is to increase the height of the hydraulic head 1. However, this solution is unpopular since it results in a larger pump for packing within the already tight constraints of an engine bay. Since the current trend is to reduce the dimensions of pumps and other engine components, increasing the size of the pump by increasing the height of the hydraulic head is undesirable.

Accordingly, the aim is to provide a high pressure diesel fuel pump with increased pump capacity (stroke length) without increasing the height of the hydraulic head.

Therefore, it is now desired to provide an improved drivetrain assembly for a high pressure diesel fuel pump to provide an increased pump capacity.

### SUMMARY OF THE INVENTION

In a first aspect of the present invention there is provided a high pressure diesel fuel pump comprising a pumping assembly and a drivetrain assembly, the pumping assembly comprising a plunger extending from a pump head along a pumping axis, the drivetrain assembly comprising a drive shaft and a cam mounted thereon within a cambox of a housing, a shoe for contact with a lower end of the plunger, a roller mounted within a cavity of the shoe for contact with the cam, and a shoe guide mounted within a guide chamber of the housing substantially between the cam and the plunger and adapted to receive the shoe and roller within a bore thereof, wherein the plunger is arranged for reciprocating linear movement along the pumping axis within a pumping chamber of the housing upon rotation of the cam, wherein the shoe guide comprises a pair of tangs extending from a lower end of a main body of the shoe guide to support the roller therewith.

With this arrangement, the shoe guide has a reduced effective length of the body, which allows the cam to extend into the space below the body that is occupied by the shoe guide. This is facilitated by the cam being able to pass between the tangs resulting in a greater reach for the cam and a greater stroke length for the drivetrain (increased pump capacity).

The tangs, however, enable the guide to continue to support the sliding of the roller beyond the lower end of the body in order that the roller can remain in contact with both the shoe and the cam.

By 'main body (of the shoe guide)' what is meant is the part of the shoe guide that surrounds and defines the bore, e.g. not including the tangs.

The main body of the shoe guide may comprise a reduced length. Accordingly, the 'body of reduced length' is intended to be relative to a body of a typical shoe guide.

The tangs comprise between approximately 5% and approximately 50% of a total length of the shoe guide. Preferably, the tangs comprise between approximately 10% and approximately 30% of a total length of the shoe guide. More preferably, the tangs comprise approximately 18% of a total length of the shoe guide.

The tangs may extend the length of the shoe guide to a total length of a typical shoe guide. The tangs may extend the length of the shoe guide to a length greater than that of a typical shoe guide.

By 'typical shoe guide, what is meant is any known shoe guide and length associated therewith, such that any such known shoe guide may be replaced with a shoe guide of the first aspect, with a similar total length, but incorporating the tangs as part of that length. Accordingly, the shoe guide of the first aspect may be provided in a number of different lengths to fit different pumps, whilst providing the added benefit of a greater stroke length within that pump.

Preferably, the pair of tangs are substantially diametrically opposed one another when extending from the lower end of the body.

Preferably, each tang comprises a substantially consistent width from an attached end to a free end.

Preferably, each tang comprises an external profile matching that of the body. Preferably, therefore, each tang comprises an external curve substantially consistent with the external profile of the body.

Preferably, the tangs extend from the lower end of the body centred on a first pair of opposing walls of the bore. Preferably, the tangs comprise an extension of the inner profile of the bore. Preferably, the tangs comprise inner flat faces extending the first pair of opposing walls of the bore.

Preferably, the bore comprises corner channels between the first pair of opposing walls and a second pair of opposing walls. Preferably, the channels comprise concavely curved passages.

Preferably, the tangs comprise concavely curved portions on either side of the flat face extending a part of the corner channels.

Preferably, a free end of each of the tangs comprises a slight concave curve extending parallel to the flat face. Preferably, the curve extends between the curved portions.

Preferably, the roller comprises a cylindrical body with a protruding dome on each end thereof. Preferably, each domes comprises a flat crest.

Preferably, the shoe guide is configured to receive the shoe and the roller in an orientation such that the flat crests of the domes of the roller contact the flat inwardly directed faces of the tangs. The contact between the domes of the roller contact the flat inwardly directed faces of the tangs is suitable to support the roller, but allow sliding movement therebetween.

Between the tangs, the body of the shoe guide may comprise axial flow passages.

Preferably, the cam comprises a body having opposing end faces and a continuous rolling face. Preferably, the body comprises a depth (between the two end faces) approximately equal to that of the clearance between the flat faces of the opposing tangs. Accordingly, the cam is able to enter the space between the tangs, which provides a greater stroke depth (the roller and shoe can be pushed higher, which in turn pushed the plunger higher).

Preferably, the opposing end faces are shaped to provide at least one lobe. Preferably, the opposing end faces are shaped to provide two lobes, preferably opposing. The opposing end faces may be shaped to provide more than two lobes.

Preferably, each end face comprises a shallow flange. Preferably, the flanges comprise smaller dimensions than that of the respective end face exposing a lip on said end face therearound. By 'smaller dimensions' what is meant is, the length and/ or width of each flange is smaller than the respective length and/or width of the respective end face.

Preferably, at an apex of each lobe, the lip comprises a depth approximately equal to the length of the tangs of the shoe guide. By 'apex', what is meant is the point at which the lobe reaches a peak distance from a central rotation point of the lobe. Accordingly, whilst the main body of the cam is configured to enter the space between the tangs, the flanges provide abutments to roll against the tangs and prevent the cam from hitting the shoe guide and roller.

Preferably, each flange is mounted substantially centrally on the respective end face. Preferably, the flanges are substantially circular and comprise a diameter that is smaller than the width of the narrowest part of the respective end face.

Preferably, the cavity of the shoe is configured to accommodate approximately up to 50% of the body of the roller.

The shoe comprises a body with the cavity in a lower face at a lower end thereof and a plunger contact face at an upper end thereof.

Preferably, the plunger contact face comprises smaller dimensions than that of the lower face. By 'smaller dimensions' what is meant is, the length and/ or width of the plunger contact face is smaller than the respective length and/or width of the lower face. Accordingly, since the greatest stress in a shoe is found in the plunger contact area, the dimensions of the surrounding area is reduced significantly, which in turn minimises the reciprocating mass of the shoe. If the reciprocating mass can be reduced, a less stiff return spring and spring seat can be used without compromising performance. The advantage of this adapted shoe is therefore realised with a reduced drive torque and savings in CO₂ emissions.

Preferably, the shoe body comprises an upper portion comprising the upper end (and therefore, the plunger contact face) and a lower portion comprising the lower end (and therefore, the cavity).

Preferably, the lower portion is substantially the shape of the bore of the shoe guide, e.g. cuboidal.

Preferably, the upper portion of the shoe body comprises smaller dimensions than that of the lower portion of the shoe body. By 'smaller dimensions' what is meant is, the length and/ or width of the upper portion at any point is smaller than the respective length and/or width of the lower portion.

Preferably, the upper portion of the shoe body comprises a polyhedron terminating in the flat contact face. More preferably, the upper portion of the shoe body comprises a substantially pyramidal shape terminating in the flat contact face.

Alternatively, the upper portion of the shoe body may comprise a cone terminating in the flat contact face.

Preferably, the plunger contact face is at least as large as the lower end of the plunger and most preferably, is substantially the same size as the lower end of the plunger. The shape of the contact face may be dictated by the shape of the upper portion of the shoe, e.g. a circular face with a cone, or a square face with a pyramid. However, any suitable shape may be used for the contact face.

In a second aspect of the present invention there is provided a cam follower assembly for a high pressure diesel fuel pump, the assembly comprising a shoe for contact with a lower end of a reciprocating plunger, a roller adapted to be mounted within a cavity of the shoe for contact with a cam, and a shoe guide adapted to be mounted within a guide chamber of a housing substantially between the cam and the plunger and adapted to receive the shoe and roller within a bore thereof, characterised in that the shoe guide comprises a pair of tangs extending from a lower end of a main body of the shoe guide to support the roller therewith.

It will be appreciated that the relevant preferred features described in relation to the first aspect of the invention apply to the second aspect of the invention.

In a third aspect of the present invention there is provided a high pressure diesel fuel pump comprising a pumping assembly and a drivetrain assembly, the pumping assembly comprising a plunger extending from a pump head along a pumping axis, the drivetrain assembly comprising a drive shaft and a cam mounted within a cambox of a housing, a shoe for contact with a lower end of the plunger, a roller mounted within a cavity of the shoe for contact with the cam, and a shoe guide mounted within a guide chamber substantially between the cam and the plunger and adapted to receive the shoe and roller within a bore thereof, wherein the plunger is arranged for reciprocating linear movement along the pumping axis within a pumping chamber of the housing upon rotation of the cam, wherein the cam comprises a main body having opposing end faces and a continuous rolling face, characterised in that each end face comprises a shallow flange comprising smaller dimensions than that of the respective end face.

With this arrangement, the cam is better adapted to be able to enter a space occupied by a lower part of a shoe guide to provide a greater stroke length, without needing to increase the height of the hydraulic head. The flanges provide natural abutments to prevent cam overreaching and damage to the shoe guide and allow minimal changes to the dimensions of the driveshaft on either side of the cam.

It will be appreciated that the relevant preferred features described in relation to the first and second aspects of the invention apply to the third aspect of the invention.

In a fourth aspect of the present invention there is provided a cam for a high pressure diesel fuel pump comprising a main body having opposing end faces and a continuous rolling face, characterised in that each end face comprises a shallow flange comprising smaller dimensions than that of the respective end face.

It will be appreciated that the relevant preferred features described in relation to the first, second and third aspects of the invention apply to the fourth aspect of the invention.

In a fifth aspect of the present invention there is provided a high pressure diesel fuel pump comprising a pumping assembly and a drivetrain assembly, the pumping assembly comprising a plunger extending from a pump head along a pumping axis, the drivetrain assembly comprising a drive shaft and a cam mounted within a cambox of a housing, a shoe for contact with a lower end of the plunger, a roller mounted within a cavity of the shoe for contact with the cam, and a shoe guide mounted within a guide chamber substantially between the cam and the plunger and adapted to receive the shoe and roller within a bore thereof, wherein the plunger is arranged for reciprocating linear movement along the pumping axis within a pumping chamber of the drivetrain housing upon rotation of the cam, wherein the shoe comprises a body with the cavity in a lower face at a lower end thereof and a plunger contact face at an upper end thereof, characterised in that the plunger contact face comprises smaller dimensions than that of the lower face.

With this arrangement, since the greatest stress in a shoe is found in the plunger contact area, namely the plunger contact face, the dimensions of the contact face and surrounding area can be reduced significantly, which in turn minimises the reciprocating mass of the shoe. If the reciprocating mass can be reduced, a less stiff return spring and spring seat can be used without compromising performance. The advantage of this adapted shoe is therefore realised with a reduced drive torque and savings in CO₂ emissions.

It will be appreciated that the relevant preferred features described in relation to the first, second, third and fourth and aspects of the invention apply to the fifth aspect of the invention.

In a sixth aspect of the present invention there is provided a shoe for contact with a lower end of the plunger for use in a high pressure diesel fuel pump comprising a body having a roller cavity in a lower face at a lower end thereof and a plunger contact face at an upper end thereof, characterised in that the plunger contact face comprises smaller dimensions than that of the lower face.

It will be appreciated that the relevant preferred features described in relation to the first, second, third, fourth and fifth aspects of the invention apply to the sixth aspect of the invention.

### BRIEF DESCRIPTION OF THE DRAWINGS

For a better understanding of the invention, and to show how exemplary embodiments may be carried into effect, reference will now be made to the accompanying drawings in which:
Figure 1a is a cross-sectional partial view of a **prior art** pumping assembly and drivetrain assembly of a high pressure diesel fuel pump at bottom dead centre (BDC);
Figure 1b is a cross-sectional partial view of a **prior art** pumping assembly and drivetrain assembly of a high pressure diesel fuel pump at top dead centre (TDC);
Figure 2a is a cross-sectional partial view of a pumping assembly and drivetrain assembly of a high pressure diesel fuel pump at bottom dead centre (BDC) according to an embodiment of the invention;
Figure 2b is a cross-sectional partial view of a prior art pumping assembly and drivetrain assembly of a high pressure diesel fuel pump at top dead centre (TDC) according to an embodiment of the invention;
Figure 3 is a perspective view of an adapted shoe guide according to the invention as shown in Figures 2a and 2b;
Figure 4 is a perspective view of an adapted roller according to the invention as shown in Figures 2a and 2b;
Figure 5 is a perspective view of an adapted shoe according to another embodiment of the invention as shown in Figures 2a and 2b;
Figure 6a is a perspective view of an adapted cam according to a further embodiment of the invention as shown in Figures 2a and 2b;
Figure 6b is a side view of the adapted cam according Figure 6a; and
Figure 6c shows an end view of the adapted cam according to Figure 6a.

### DETAILED DESCRIPTION OF THE EXEMPLARY EMBODIMENTS

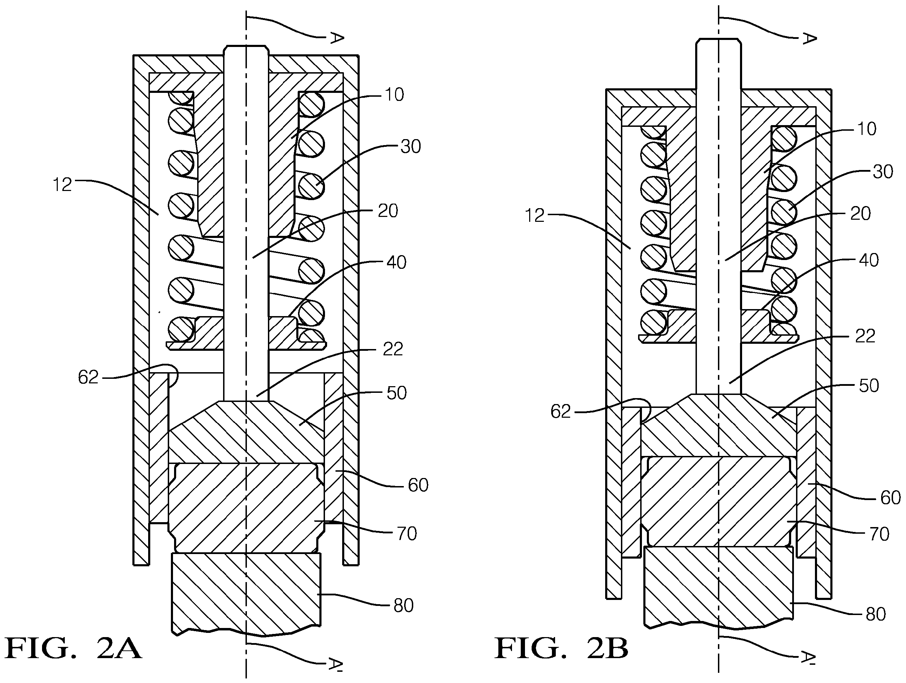

As shown in Figures 2 to 4, a high pressure diesel fuel pump comprises a pumping assembly and a drivetrain assembly, the pumping assembly comprising a plunger 20 extending from a pump head 10 along a pumping axis A-A', the drivetrain assembly comprising a drive shaft (not shown) and a cam 80 mounted thereon within a cambox of a housing, a shoe 50 for contact with a lower end 22 of the plunger 20, a roller 70 mounted within a cavity 52 of the shoe 50 for contact with the cam 80, and a shoe guide 60 mounted within a guide chamber of the housing substantially between the cam 80 and the plunger 20 and adapted to receive the shoe 50 and roller 70 within a bore 62 thereof, wherein the plunger 20 is arranged for reciprocating linear movement along the pumping axis A-A' within a pumping chamber 12 of the housing upon rotation of the cam 80, characterised in that the shoe guide 60 comprises a pair of tangs 68 extending from a lower end 61 of a main body 64 to support the roller 70 therewith.

By 'main body 64 (of the shoe guide)' what is meant is the part of the shoe guide 60 that surrounds and defines the bore 62, e.g. not including the tangs 68.

The body 64 has a reduced length when compared with a typical shoe guide to accommodate the length of the tangs 68 extending therefrom. However, the tangs 68 can adopt a length that extends a total length of the shoe guide (main body 64 plus tangs 68) to a length greater than that of a typical shoe guide. The advantages are still seen, since the tangs 68 allow a greater stroke length regardless of the total guide 60 length.

In an exemplary embodiment, the tangs 68 comprise approximately 18% of the total length of the shoe guide 60, although it is to be appreciated that the tangs may reasonably comprise between approximately 5% and approximately 50% of the total length of the shoe guide 60.

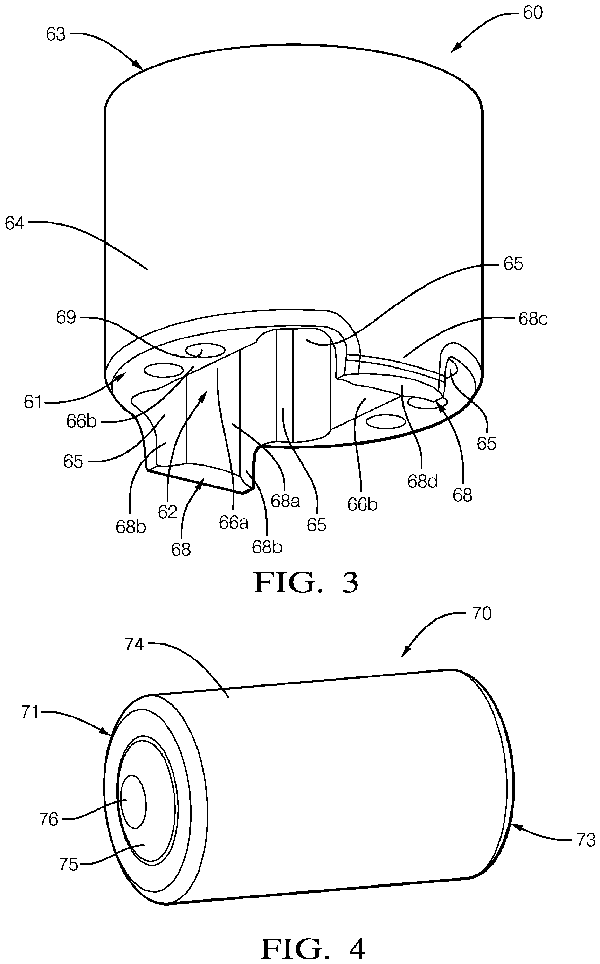

Figure 3 shows an exemplary version of the shoe guide 60. The guide 60 comprises a body 64, which in this case is substantially cylindrical in shape in order to fit directly (press-fit) within a cylindrical aperture within the guide chamber of the housing. It is, however, to be appreciated that the body 64 of the guide 60 may be of any suitable external shape to correspond with either the internal shape of a guide chamber, or an adapter which may sit inside such a chamber.

The guide 60 comprises lower and upper ends 61, 63, respectively and the bore 62 is substantially centrally located and extends between the two ends 61, 63. The bore 62 is adapted to provide guided sliding contact with the shoe 50 and roller 70.

The bore 62 comprises a shape that substantially corresponds with the external shape of the largest outer peripheral boundary of the shoe 50. In this case, the shape of the bore 62 is substantially cuboidal to correspond to that of a lower portion of the shoe 50 at the lower end 51 thereof.

The bore 62 comprises two pairs of protruding retaining walls 66a, 66b with each wall of a pair 66a, 66b being disposed opposite one another. The bore 62 further comprises a plurality of flow passages in the form of four concavely curved channels 65 cut into the corners of the bore 62 and extending between the two ends 61, 63 of the body 64. Accordingly, the sliding relationship with the shoe 50 is dependent on the two pairs of retaining walls 66a, 66b that are disposed between the corner channels 65.

The tangs 68 extend from the lower end 61 of the body 64 substantially diametrically opposite one another on the cylindrical body 64, but centred on the first pair of retaining walls 66a of the bore 62.

The tangs 68 comprise an extension of the inner and outer profiles of the bore 62 and the body 64 respectively. Accordingly, the tangs 68 comprise an inner flat face 68a extending the retaining wall 66a of the bore 62, and concavely curved portions 68b on either side of the flat face 68a extending an adjacent part of the corner channels 65. An outer face 68c of the tangs 68 comprises an outer profile mirroring that of the cylindrical outer periphery of the body 61.

A free end 68d of each of the tangs 68 comprises a slight concave curve running parallel to the flat face 68a and extending a full width of the tangs 68.

In the body 64 behind the second pair of retaining walls 66b, there are provided a pair of through bores 69 between the two ends 61, 63, which function as additional flow passages.

Figure 4 shows an exemplary embodiment of the roller 70. The roller 70 comprises a cylindrical body 74 with circular ends 71, 73. Centrally disposed on each of the circular ends 71, 73, there is provided an outwardly protruding dome 75 with a flat crest 76.

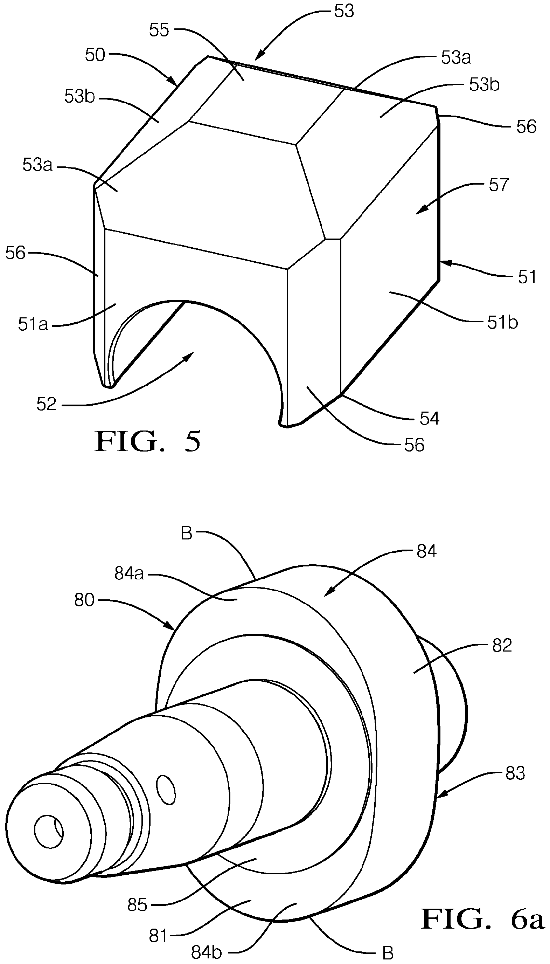

Figure 5 shows an exemplary embodiment of the shoe 50. Accordingly, in a second embodiment of the invention, a high pressure diesel fuel pump comprises a pumping assembly and a drivetrain assembly, the pumping assembly comprising a plunger 20 extending from a pump head 10 along a pumping axis A-A', the drivetrain assembly comprising a drive shaft (not shown) and a cam 80 mounted thereon within a cambox of a housing, a shoe 50 for contact with a lower end 22 of the plunger 20, a roller 70 mounted within a cavity 52 of the shoe 50 for contact with the cam 80, and a shoe guide 60 mounted within a guide chamber of the housing substantially between the cam 80 and the plunger 20 and adapted to receive the shoe 50 and roller 70 within a bore 62 thereof, wherein the plunger 20 is arranged for reciprocating linear movement along the pumping axis A-A' within a pumping chamber 12 of the housing upon rotation of the cam 80, wherein the shoe 50 comprises a body with the cavity 52 in a lower face 54 at a lower end 51 thereof and a plunger contact face 55 at an upper end 53 thereof, characterised in that the plunger contact face 55 comprises smaller dimensions than that of the lower face 54.

At the lower end 51 of the shoe 50, the body 57 comprises a shallow cuboid being formed from two pairs of opposing outer walls 51a, 51b and a substantially square lower face 54. Between the outer walls 51a, 51b, the lower end 51 comprises blunted corners 56. The cavity 52 is provided within the body 57 at the lower end 51 and comprises a half-cylindrical open-ended aperture. The body 57 at the lower end 51 of the shoe 50 is sized to fit snugly between the pairs of retaining walls 66a, 66b of the bore 62 of the shoe guide 60. The blunted corners 56 substantially span across the corner channels 65 of the bore 62 to provide large flow passages around each corner of the shoe 50.

An upper end 53 of the shoe 50 the body 57 is substantially pyramidal being formed from two pairs of opposing sloping walls 53a, 53b converging on the flat plunger contact face 55. The plunger contact face 55 is substantially square.

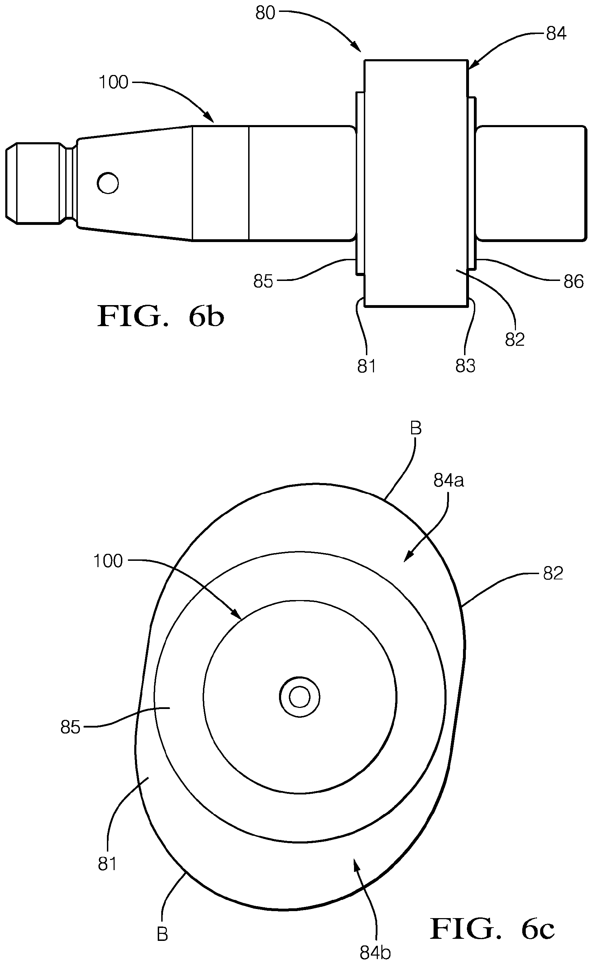

Figures 6a to 6c show an exemplary embodiment of the cam 80 on a driveshaft 100. Accordingly, in a further embodiment, a high pressure diesel fuel pump comprises a pumping assembly and a drivetrain assembly, the pumping assembly comprising a plunger 20 extending from a pump head 10 along a pumping axis A-A', the drivetrain assembly comprising a drive shaft (not shown) and a cam 80 mounted thereon within a cambox of a housing, a shoe 50 for contact with a lower end 22 of the plunger 20, a roller 70 mounted within a cavity 52 of the shoe 50 for contact with the cam 80, and a shoe guide 60 mounted within a guide chamber of the housing substantially between the cam 80 and the plunger 20 and adapted to receive the shoe 50 and roller 70 within a bore 62 thereof, wherein the plunger 20 is arranged for reciprocating linear movement along the pumping axis A-A' within a pumping chamber 12 of the housing upon rotation of the cam 80, wherein the cam 80 comprises a main body 84 having opposing end faces 81, 83 and a continuous rolling face 82, characterised in that each end face 81, 83 comprises a shallow flange 85, 86 comprising smaller dimensions than that of the respective end face 81, 83.

As shown in Figure 6c, the body 84 of the cam 80 comprises a skewed elliptical cylinder comprising two lobes 84a, 84b. This means that the body 84 is substantially elliptical, but each lobe 84a, 84b provides a 'leaning' curve as opposed to an 'even' curve. The 'lean' is provided in the same direction, so that as the cam is rotated in a first direction, each lobe 84a, 84b, provides a gradual rise and a (relatively) sharper drop away for the roller 70 and shoe 50 being carried on the rolling face 82.

Each flange 85, 86 comprises a shallow circular member of greater diameter than the adjacent portion of the driveshaft 100. However, the diameter of the flanges 85, 86 is smaller than that of the narrowest span of the end faces 81, 83. Accordingly, by the nature of their circular shape, each flange 85, 86, comprises a width and a height (the same diameter) that are smaller than a width and a height of the end faces 81, 83. As a result, a lip is formed on each end face 81, 83 around the entire periphery of the end faces 81, 83. The lip is greatest in depth at a top part or apex of the curve adopted by each lobe 84a, 84b. This depth is approximately equal to a length of the tangs 68 as measured from the lower end 61 of the shoe guide body 64 to the free end 68d), such that the flanges 85, 86 make sliding contact with the curved free ends 68d of the tangs 68 when the cam 80 is in a top dead centre position. The flanges 85, 86 therefore, also provide a natural abutment to prevent the cam 80 from contacting the lower end 61 of the body 64 of the shoe guide 60.

During assembly, the shoe guide 60 is press-fitted into the guide chamber of the housing such that the bore 62 is located centrally on the pumping axis A-A'. The shoe 50 is disposed within the bore 62 of the guide 60 with the plunger contact face 55 oriented towards the pumping chamber 12 and the lower face 54 oriented towards the cambox. The plunger contact face 55 contacts the bottom end 22 of the plunger 20. The first pair of outer walls 51a of the lower end 51 of the shoe 50 are arranged to be in sliding contact with the first pair of retaining walls 66a within the bore 62, such that the open ends of the cavity 52 are open to the first pair of retaining walls 66a. The roller 70 is disposed within the cavity 52 such that the flat crests 76 of the domes 75 at each end 71, 73 contact said first pair of retaining walls 66a. The rolling face 82 of the cam 80 contacts the cylindrical face 72 of the roller 70.

In use, when the cam 80 is at bottom dead centre, the lobes 84a, 84b are disposed substantially laterally such that a the roller 70 rests against a portion of the rolling face 82 between the lobes 84a, 84b. In this configuration, the roller 70 and shoe 50 are in a dropped position within the bore 62 of the shoe guide 60 and the flat crests 76 of the domes 75 of the roller 70 are supported by the flat faces 68a of the tangs 68. Accordingly, the lower end 22 of the plunger 20 is located within the bore 62 of the guide 60 sitting against the plunger contact face 55 of the shoe 50 facilitated by the extended spring 30 in a lower-than-typical bottom position.

As the cam 80 rotates from bottom dead centre, one of said lobes 84a, 84b begins to rise pushing the roller 70 and shoe 50 upwardly within the guide 60. As this happens, the flat crests 76 of the domes 75 move beyond the tangs 68 into the bore 62 to be supported by said first pair of retaining walls 66a. The narrower main body of the cam 80 enables one of said lobes 84a, 84b to enter the space between the tangs 68 of the guide 60 in order that the roller 70 and shoe 50 are pushed upwardly in the bore 62 to a greater height. At top dead centre, the flanges 85, 86 make contact with the curved free ends 68d of the tangs 68 which prevents overreach. The upper end 53 of the shoe 50 now protrudes beyond the guide 60. In this configuration, the lower end 22 of the plunger 20 is in a higher-than-typical top position and the spring 30 is compressed.

Due to the tangs 68, the roller 70 and shoe 50 can drop to a much lower level on the pumping axis A-A'. In addition, due to the narrower body 84 of the cam 80, the roller 70 and shoe 50 can be pushed to a much higher level on the pumping axis A-A'. Therefore, the stroke length of the drivetrain is much greater.

The pyramidal shape of the upper end 53 of the shoe 50 has a significantly reduced mass, whilst providing a robust plunger contact face 55, which is able to withstand the stresses of a reciprocating plunger 20. Therefore, it is not necessary to use such a stiff spring 30, which can result in reduced drive torque and CO₂ emissions.

Although a few preferred embodiments have been shown and described, it will be appreciated by those skilled in the art that various changes and modifications might be made without departing from the scope of the invention, as defined in the appended claims.

## Claims

1. A high pressure diesel fuel pump comprising a pumping assembly and a drivetrain assembly, the pumping assembly comprising a plunger (20) extending from a pump head (10) along a pumping axis (A-A'), the drivetrain assembly comprising a drive shaft (100) and a cam (80) mounted thereon within a cambox of a housing, a shoe (50) for contact with a lower end (22) of the plunger (20) and the shoe (50) comprising a body (57) with a cavity (52) in a lower face at a lower end (54) thereof and a plunger contact face (53) at an upper end (53) thereof, a roller (70) mounted within a cavity (52) of the shoe (50) for contact with the cam (80), and a shoe guide (60) mounted within a guide chamber of the housing substantially between the cam (80) and the plunger (20) and adapted to receive the shoe (50) and roller (70) within a bore (62) thereof, wherein the plunger (20) is arranged for reciprocating linear movement along the pumping axis (a-A') within a pumping chamber (12) of the housing upon rotation of the cam (80), wherein the shoe guide (60) comprises a pair of tangs (68) extending from a lower end (61) of a main body (64) of the shoe guide (60) to support the roller (70) therewith, and wherein the tangs (68) comprise between approximately 5% and approximately 50% of a total length of the shoe guide (60); **characterized in that** at the upper end (53) of the shoe (50), the body (57) is substantially pyramidal being formed from two pairs of opposing sloping walls (53a, 53b) converging on a flat plunger contact face (55).

2. A high pressure diesel fuel pump according to claim 1, wherein the tangs (68) comprise approximately 18% of a total length of the shoe guide.

3. A high pressure diesel fuel pump according to any one of claims 1 to 2, wherein the pair of tangs (68) are substantially diametrically opposed one another when extending from the lower end (61) of the body (64).

4. A high pressure diesel fuel pump according to any one of claims 1 to 3, wherein the tangs (68) extend from the lower end (61) of the body (64) centred on a first pair of opposing walls (66a) of the bore (62).

5. A high pressure diesel fuel pump according to claim 4, wherein the tangs (68) comprise inner flat faces (68a) extending the first pair of opposing walls (66a) of the bore (62).

6. A high pressure diesel fuel pump according to claim 5, wherein a free end (68d) of each of the tangs (68) comprises a slight concave curve extending parallel to the flat face (68a).

7. A high pressure diesel fuel pump according to any one of claims 1 to 6, wherein the roller (70) comprises a cylindrical body (74) with a protruding dome (75) on each end (71, 73) comprising a flat crest (76).

8. A high pressure diesel fuel pump according to claim 7, wherein the shoe guide (60) is configured to receive the shoe (50) and the roller (70) in an orientation such that the flat crests (76) of the domes (75) of the roller (70) contact the flat inwardly directed faces (68a) of the tangs (68).

9. A high pressure diesel fuel pump according to claim 5, or to any one of claims 7 to 9 when dependent upon claim 6, wherein the cam comprises a body (84) having opposing end faces (81, 83) and a continuous rolling face (82) and the body (84) comprises a depth (between the two end faces (81, 83)) approximately equal to that of the clearance between the flat faces (68a) of the opposing tangs (68).

10. A high pressure diesel fuel pump according to claim 9, wherein the opposing end faces (81, 83) are shaped to provide two opposing lobes (84a, 84b) and comprise a shallow flange (85, 86) thereon.

11. A high pressure diesel fuel pump according to claim 10, wherein the flanges (85,86) comprise smaller dimensions than that of the respective end face (81, 83) exposing a lip on said end face (81, 83) therearound, which at an apex (B) of each lobe (84a, 84b), comprises a depth approximately equal to the length of the tangs (68) of the shoe guide (60).

12. A high pressure diesel fuel pump according to any one of claims 1 to 11, wherein the shoe (50) comprises the body (57) with the cavity (52) in a lower face (54) at a lower end (51) thereof and the plunger contact face (55) at the upper end (53) thereof and the plunger contact face (55) comprises smaller dimensions than that of the lower face (54).

13. A high pressure diesel fuel pump according to claim 12, wherein the shoe body (57) comprises an upper portion comprising the upper end (53) (and therefore, the plunger contact face (55)) and a lower portion comprising the lower end (51) (and therefore, the cavity (52)), and the upper portion of the shoe body (57) comprises smaller dimensions than that of the lower portion.

14. A high pressure diesel fuel pump according to claim 13, wherein at the upper end (53) of the shoe (50), the body (57) is substantially pyramidal being formed from two pairs of opposing sloping walls (53a, 53b) converging on a flat plunger contact face (55).

## Patentansprüche

1. Hochdruckdieselkraftstoffpumpe, die eine Pumpanordnung und eine Antriebsstranganordnung aufweist, wobei die Pumpanordnung einen Kolben (20) aufweist, der sich von einem Pumpenkopf (10) entlang einer Pumpachse (A-A') erstreckt, wobei die Antriebsstranganordnung aufweist eine Antriebswelle (100) und einen darauf angebrachten Nocken (80) in einer Nockenbox eines Gehäuses, einen Schuh (50) zum Kontakt mit einem unteren Ende (22) des Kolbens (20), und wobei der Schuh (50) einen Körper (57) mit einem Hohlraum (52) in einer unteren Fläche an einem unteren Ende (54) davon und eine Kolbenkontaktfläche (53) an einem oberen Ende (53) davon aufweist, eine Rolle (70), die in einem Hohlraum (52) des Schuhs (50) angebracht ist zum Kontakt mit dem Nocken (80), und eine Schuhführung (60), die in einer Führungskammer des Gehäuses im Wesentlichen zwischen dem Nocken (80) und dem Kolben (20) angebracht ist und ausgebildet ist zur Aufnahme des Schuhs (50) und der Rolle (70) in einer Bohrung (62) davon, wobei der Kolben (20) ausgebildet ist für eine lineare Hin- und Herbewegung entlang der Pumpachse (a-A') in einer Pumpkammer (12) des Gehäuses bei Rotation des Nockens (80), wobei die Schuhführung (60) ein Paar von Zapfen (68) aufweist, die sich von einem unteren Ende (61) eines Hauptkörpers (64) der Schuhführung (6) erstrecken, um die Rolle (70) damit zu stützen, und wobei die Zapfen (68) zwischen ungefähr 5% und ungefähr 50% einer Gesamtlänge der Schuhführung (60) aufweisen; **dadurch gekennzeichnet, dass** an dem oberen Ende (53) des Schuhs (50) der Körper (57) im Wesentlichen pyramidenförmig ist, geformt aus zwei Paaren von gegenüberliegenden geneigten Wänden (53a, 53b), die an einer flachen Kolbenkontaktfläche (55) konvergieren.

2. Hochdruckdieselkraftstoffpumpe gemäß Anspruch 1, wobei die Zapfen (68) ungefähr 18% einer Gesamtlänge der Schuhführung aufweisen.

3. Hochdruckdieselkraftstoffpumpe gemäß einem der Ansprüche 1 bis 2, wobei das Paar von Zapfen (68) sich im Wesentlichen diametral gegenüberliegt, wenn es sich von dem unteren Ende (61) des Körpers (64) erstreckt.

4. Hochdruckdieselkraftstoffpumpe gemäß einem der Ansprüche 1 bis 3, wobei sich die Zapfen (68) von dem unteren Ende (61) des Körpers (64) erstrecken, zentriert an einem ersten Paar von gegenüberliegenden Wänden (66a) der Bohrung (62).

5. Hochdruckdieselkraftstoffpumpe gemäß Anspruch 4, wobei die Zapfen (68) innere flache Flächen (68a) aufweisen, die das erste Paar von gegenüberliegenden Wänden (66a) der Bohrung (62) erweitern.

6. Hochdruckdieselkraftstoffpumpe gemäß Anspruch 5, wobei ein freies Ende (68d) jedes der Zapfen (68) eine leicht konkave Kurve aufweist, die sich parallel zu der flachen Fläche (68a) erstreckt.

7. Hochdruckdieselkraftstoffpumpe gemäß einem der Ansprüche 1 bis 6, wobei die Rolle (70) einen zylindrischen Körper (74) mit einer hervorstehenden Kuppel (75) an jedem Ende (71, 73) aufweist, die einen flachen Scheitel (76) aufweist.

8. Hochdruckdieselkraftstoffpumpe gemäß Anspruch 7, wobei die Schuhführung (60) konfiguriert ist zum Aufnehmen des Schuhs (50) und der Rolle (70) in einer Ausrichtung derart, dass die flachen Scheitel (76) der Kuppeln (75) der Rolle (70) die flachen, nach innen gerichteten Flächen (68a) der Zapfen (68) kontaktieren.

9. Hochdruckdieselkraftstoffpumpe gemäß Anspruch 5 oder einem der Ansprüche 7 bis 9, wenn von Anspruch 6 abhängig, wobei der Nocken einen Körper (84) mit gegenüberliegenden Endflächen (81, 83) und einer durchgehenden Rollfläche (82) aufweist und der Körper (84) eine Tiefe (zwischen den zwei Endflächen (81, 83)) ungefähr gleich dem Abstand zwischen den flachen Flächen (68a) der gegenüberliegenden Zapfen (68) aufweist.

10. Hochdruckdieselkraftstoffpumpe gemäß Anspruch 9, wobei die gegenüberliegenden Endflächen (81, 83) geformt sind, um zwei gegenüberliegende Nasen (84a, 84b) vorzusehen, und einen flachen Flansch (85, 86) darauf aufweisen.

11. Hochdruckdieselkraftstoffpumpe gemäß Anspruch 10, wobei die Flansche (85, 86) kleinere Abmessungen aufweisen als die der jeweiligen Endfläche (81, 83), wodurch eine Lippe an der Endfläche (81, 83) um diese herum freigelegt wird, die an einem Scheitel (B) jeder Nase (84a, 84b) eine Tiefe aufweist, die ungefähr gleich der Länge der Zapfen (68) der Schuhführung (60) ist.

12. Hochdruckdieselkraftstoffpumpe gemäß einem der Ansprüche 1 bis 11, wobei der Schuh (50) einen Körper (57) mit dem Hohlraum (52) in einer unteren Fläche (54) an einem unteren Ende (51) davon und der Kolbenkontaktfläche (55) an dem oberen Ende (53) davon aufweist und die Kolbenkontaktfläche (55) kleinere Abmessungen als die der unteren Fläche (54) aufweist.

13. Hochdruckdieselkraftstoffpumpe gemäß Anspruch 12, wobei der Schuhkörper (57) einen oberen Teil, der das obere Ende (53) (und somit die Kolbenkontaktfläche (55)) aufweist, und einen unteren Teil aufweist, der das untere Ende (51) (und somit den Hohlraum (52)) aufweist, und wobei der obere Teil des Schuhkörpers (57) kleinere Abmessungen als der untere Teil aufweist.

14. Hochdruckdieselkraftstoffpumpe gemäß Anspruch 13, wobei an dem oberen Ende (53) des Schuhs (50) der Körper (57) im Wesentlichen pyramidenförmig ist, geformt aus zwei Paaren von gegenüberliegenden geneigten Wänden (53a, 53b), die an einer flachen Kolbenkontaktfläche (55) konvergieren.

## Revendications

1. Pompe à gazole haute pression, comprenant un ensemble de pompage et un ensemble train de transmission, l'ensemble de pompage comprenant un plongeur (20) s'étendant depuis une tête (10) de pompe suivant un axe de pompage (A-A'), l'ensemble train de transmission comprenant un arbre de transmission (100) et une came (80) montée sur lui à l'intérieur d'une boîte à came d'un carter, un patin (50) destiné à venir au contact d'une extrémité inférieure (22) du plongeur (20) et le patin (50) comprenant un corps (57) pourvu d'une cavité (52) dans une face inférieure à son extrémité inférieure (54) et d'une face de contact (53) de plongeur à son extrémité supérieure (53),
un rouleau (70) monté à l'intérieur d'une cavité (52) du patin (50) destiné à venir au contact de la came (80), et un guide (60) de patin monté à l'intérieur d'une chambre de guide du carter sensiblement entre la came (80) et le plongeur (20) et adapté à recevoir le patin (50) et le rouleau (70) à l'intérieur d'un alésage (62) qui y est ménagé, le plongeur (20) étant agencé pour effectuer un mouvement linéaire de va-et-vient suivant l'axe de pompage (a-A') à l'intérieur d'une chambre de pompage (12) du carter lors de la rotation de la came (80),
le guide (60) de patin comprenant une paire de griffes (68) s'étendant depuis une extrémité inférieure (61) d'un corps principal (64) du guide (60) de patin permettant de soutenir le rouleau (70), et les griffes (68) constituant entre environ 5 % et environ 50 % d'une longueur totale du guide (60) de patin ;
**caractérisée en ce que**, à l'extrémité supérieure (53) du patin (50), le corps (57) est sensiblement pyramidal, à savoir formé de deux paires de parois inclinées opposées (53a, 53b) qui convergent sur une face plate de contact (55) de plongeur.

2. Pompe à gazole haute pression selon la revendication 1, dans laquelle les griffes (68) constituent environ 18 % d'une longueur totale du guide de patin.

3. Pompe à gazole haute pression selon l'une quelconque des revendications 1 à 2, dans laquelle la paire de griffes (68) sont sensiblement diamétralement opposées l'une par rapport à l'autre lorsqu'elle s'étendent depuis l'extrémité inférieure (61) du corps (64).

4. Pompe à gazole haute pression selon l'une quelconque des revendications 1 à 3, dans laquelle les griffes (68) s'étendent depuis l'extrémité inférieure (61) du corps (64), centrées sur une première paire de parois opposées (66a) de l'alésage (62).

5. Pompe à gazole haute pression selon la revendication 4, dans laquelle les griffes (68) comprennent des faces intérieures plates (68a) qui prolongent la première paire de parois opposées (66a) de l'alésage (62).

6. Pompe à gazole haute pression selon la revendication 5, dans laquelle une extrémité libre (68d) de chacune des griffes (68) comprend une légère courbure concave s'étendant parallèlement à la face plate (68a).

7. Pompe à gazole haute pression selon l'une quelconque des revendications 1 à 6, dans laquelle le rouleau (70) comprend un corps cylindrique (74) doté, sur chaque extrémité (71, 73), d'un dôme protubérant (75) comprenant une crête plate (76).

8. Pompe à gazole haute pression selon la revendication 7, dans laquelle le guide (60) de patin est configuré pour recevoir le patin (50) et le rouleau (70) selon une orientation telle que les crêtes plates (76) des dômes (75) du rouleau (70) viennent au contact des faces plates (68a) dirigées vers l'intérieur des griffes (68).

9. Pompe à gazole haute pression selon la revendication 5 ou selon l'une quelconque des revendications 7 à 9 lorsqu'elle dépend de la revendication 6, dans laquelle la came comprend un corps (84) présentant des faces d'extrémité opposées (81, 83) et une face de roulement continue (82) et le corps (84) présente une profondeur (entre les deux faces d'extrémité (81, 83)) à peu près égale à celle de l'espace séparant les faces plates (68a) des griffes opposées (68).

10. Pompe à gazole haute pression selon la revendication 9, dans laquelle les faces d'extrémité opposées (81, 83) sont conformées de manière à présenter deux lobes opposés (84a, 84b) et comprennent à leur surface une collerette mince (85, 86).

11. Pompe à gazole haute pression selon la revendication 10, dans laquelle les collerettes (85, 86) présentent des dimensions plus petites que la dimension de la face d'extrémité (81, 83) respective en révélant ainsi tout autour une lèvre sur ladite face d'extrémité (81, 83), laquelle lèvre présente, à un sommet (B) de chaque lobe (84a, 84b), une profondeur à peu près égale à la longueur des griffes (68) du guide (60) de patin.

12. Pompe à gazole haute pression selon l'une quelconque des revendications 1 à 11, dans laquelle le patin (50) comprend le corps (57) pourvu de la cavité (52) dans une face inférieure (54) à son extrémité inférieure (51) et de la face de contact (55) de plongeur à son extrémité supérieure (53), et la face de contact (55) de plongeur présente des dimensions plus petites que la dimension de la face inférieure (54).

13. Pompe à gazole haute pression selon la revendication 12, dans laquelle le corps (57) de patin comprend une partie supérieure comprenant l'extrémité supérieure (53) (et, par conséquent, la face de contact (55) de plongeur) et une partie inférieure comprenant l'extrémité inférieure (51) (et, par conséquent, la cavité (52)), et la partie supérieure du corps (57) de patin présente des dimensions plus petites que la dimension de la partie inférieure.

14. Pompe à gazole haute pression selon la revendication 13, dans laquelle, à l'extrémité supérieure (53) du patin (50), le corps (57) est sensiblement pyramidal, à savoir formé de deux paires de parois inclinées opposées (53a, 53b) qui convergent sur une face plate de contact (55) de plongeur.
